# EUROPÄISCHE PATENTSCHRIFT

(11) **EP 0 528 194 B1**
(45) Veröffentlichungstag und Bekanntmachung des Hinweises auf die Patenterteilung: **02.09.1998**
(21) Anmeldenummer: 92112489.7
(22) Anmeldetag: 21.07.1992
(51) Int. Cl.: B32B 27/32, D06N 3/04

(54) **Verfahren zur Herstellung von PVC-freien Fussbodenbelägen mit einer PVC-freien, transparenten Abdeckung sowie danach hergestellte Fussbodenbeläge**
Method for the production of a PVC-free floor covering with a PVC-free, transparent cover and floor covering thus obtained
Procédé pour la production d'un revêtement de sol exempt de PVC, avec un recouvrement transparent exempt de PVC et revêtement de sol ainsi obtenu

(30) Priorität: 16.08.1991 DE 4127107
(43) Veröffentlichungstag der Anmeldung: 24.02.1993
(73) Patentinhaber: Tarkett Pegulan GmbH & Co. KG, 67227 Frankenthal (DE)
(72) Erfinder: Müller, Norbert, Dr., W-6710 Frankenthal (DE); Rein, Brigitte, W-6700 Ludwigshafen 24 (DE); Stehfest, Thomas, W-6800 Mannheim 51 (DE)
(74) Vertreter: Grussdorf, Jürgen, Dr.

(56) Entgegenhaltungen:
- WO-A-90/06233
- GB-A- 917 276
- US-A- 4 614 556

## Beschreibung

Die vorliegende Erfindung betrifft eine PVC-freie, transparente Abdeckung für PVC-freien Fußbodenbelag sowie Verfahren zu deren Herstellung.

Kunststoffbodenbeläge, insbesondere solche aus PVC, finden heute in großem Umfang Verwendung, vor allem wegen ihrer Wirtschaftlichkeit, verschiedenartigen Oberflächengestaltung und weitgehenden Beständigkeit gegen Abnützung. Von großer technischer Bedeutung sind auch die durch Ausschäumen in einer entsprechenden Form hergestellten PVC-Schaumbeläge (sogenannte cushion vinyls) welche zur Erzeugung der notwendigen Stabilität noch mit einer zusätzlichen PVC-Deckschicht dazu versehen werden müssen. Die Deckschicht wird üblicherweise als Plastisol, als gleichmäßige Dispersion von PVC-Pulvern in einem Weichmacher aufgetragen.

Bei hochwertigen Produkten dieser Art wird die PVC-Oberschicht zusätzlich noch mit einer kratzfesten, abnutzungsbeständigeren Zusatzbeschichtung versehen, welche zusätzlich noch schmutzabstoßend wirken kann. Beispielsweise wird in der DE 34 333 82 eine wässrige Acrylat- oder Polyurethan-dispersion beschrieben. Weiterhin sind dünne Beschichtungen auf Basis von linear vernetzten Polyurethanlacken, UV-vernetzten Polyurethansystemen bzw. feuchtigkeitshärtendenden Polyurethansystemen gebräuchlich. Die Herstellung dickerer und daher besonders wiederstandsfähiger Acrylatbeschichtungen ist in der DE-A 38 16 710.7 beschrieben.

Die Verwendung von PVC-haltigen Bodenbelägen bereitet wegen des Chlor-Anteils jedoch bei der Entsorgung zunehmend Probleme, so daß nach Lösungen gesucht wurde das PVC durch andere, umweltfreundlichere Kunststoffe zu ersetzen. In der DE-A 37 432 96 sind PVC-freie Bodenbeläge beschrieben, die aus einer Kombination eines Ethylen-Vinylacetat-Copolymerisats und geeigneten Füllstoffen bestehen. Aus der DE-A 41 140 85.0 sind ferner PVC-freie Fußboßdenbeläge bekannt bei denen eine Mischung aus Ethylen-Vinylacetat-Copolymerisat und hochmolekularen und oder ultrahochmolekularen Ethylenpolymerisaten hoher Dichte verwendet werden, wodurch sich die Verschleißfestigkeit gegenüber reinem Ethylen-Vinylacetat-Polymerisat erhöht. Zur Herstellung der Bodenbeläge werden die Komponenten in einem Kneter als feine Pulver gemischt, durch die Temperaturerhöhung die Kunststoffanteile plastifiziert und das so erhalten Gemisch in Kalandern zu dünnen Folien verarbeitet die gegebenenfalls durch Duplizieren oder Triplizieren und Aufbringen auf eine Gewebeunterlage zu entsprechend dicken Bodenbelägen verarbeitet werden.

Trotz der Beimischung von Füllstoffen und härteren Kunststoffbestandteilen, erweisen sich diese Bodenbeläge jedoch immer noch als relativ empfindlich gegen Abrieb und Kratzer, so daß es notwendig ist diese mit einem zusätzlichen harten, abriebfesten Oberflächenbelag zu versehen.

Im Gegensatz zu den herkömmlichen Oberflächenbeschichtungen, welche als Plastisol, das heißt Suspension eines Kunststoffes in einem Lösemittel, aufgebracht werden und durch Gelieren bei höheren Temperaturen zu einem Film zusammenfließen, sollte nachdem bei der Herstellung der Bodenbeläge auf Lösemittel verzichtet werden konnte, auch bei der Aufbringung der Abdeckung auf Lösemittel verzichtet werden. Trotzdem sollte die entsprechende Oberfläche hinsichtlich Abriebbeständigkeit und Schmutzanfälligkeit und Kratzempfindlichkeit den bekannten Beschichtungen entsprechen und gewünschtenfalls transparent sein, damit die Musterung des Bodenbelags selbst durchscheinen kann.

Diese Aufgabe wird durch die Merkmale der Hauptansprüche gelöst und durch die Merkmale der Unteransprüche gefördert.

Erfindungsgemäß wird ein Ethylencopolymerisat sehr niederer Dichte (PE-VLD) und / oder ein lineares Ethylencopolymerisat niederer Dichte (PE-LLD) verwendet, welches bis zu 2 Gew.% Verarbeitungshilfsmittel und Stabilisatoren enthält. Um schädigende Umwelteinflüsse wie zum Beispiel UV-Licht herabzusetzen, können bis zu 60 Gew.% der Verarbeitungshilfsmittel UV-Stabilisatoren bzw. sonstige Lichtschutzmittel (z. B. sterisch gehinderte Aminoverbindungen) sein.

Besonders bevorzugt ist eine Mischung welche aus 50 - 100 Gew.%, vorzugsweise 80 - 95 Gew.% Ethylencopolymerisat sehr niederer Dichte (PE-VLD) und 0 - 50 Gew.%, vorzugsweise 5 - 20 Gew.% linearem Ethylencopolymerisat niederer Dichte (PE-LLD) sowie bis zu 2 Gew.% Verarbeitungshilfsmitteln besteht. Die Mischung soll einen Schmelzindex (MFI) nach DIN 53 735 (190 °C, 2,16) zwischen 0,3 und 8,0 g/10 Minuten besitzen. Aus solchen Produkten lassen sich Abdeckungen mit einer sehr hohen Kratzfestigkeit und einem sehr guten Abriebverhalten herstellen.

Als Verarbeitungshilfsmittel werden vorzugsweise Stearate und/oder Amidwachse sowie sterisch gehinderte Phenole eingesetzt. Als Lichtschutzmittel können sowohl sterisch gehinderte Amine sowie andere bekannte UV-Absorber oder eine Kombination derselben eingesetzt werden.

Zur Verarbeitung wird die Mischung in üblichen Knetern gemischt und bei Temperaturen von 110 - 130 °C, vorzugsweise etwa 120 °C, plastifiziert und über eine Kalander-Anlage bei Temperaturen von 130 - 145 °C zu Folien einer Stärke zwischen 0,1 und 0,5 mm ausgezogen.

Diese hergestellte Folie wird dann wiederum in einem Kalander mit dem Bodenbelag dupliziert und zur Erreichung größerer Belagstärken tripliziert, wobei gewünschtenfalls Folie und/oder Bodenbelag vor oder nachher noch mit entsprechenden Druckmustern versehen werden können.

Die erfindungsgemäß beschichteten Bodenbeläge haben nicht nur ausgezeichnete Gebrauchseigenschaften, sondern sind auch durch die völlige Freiheit von flüssigen und damit mehr oder weniger flüchtigen Weichmachern nicht "nachhärtend" und dadurch, daß die Gesamtmischung aus Ethylen-Vinylacetat-Copolymerisat und Polyethylen besteht auch insgesamt recyclingfähig.

### Ausführungsbeispiel:

Ein Ethylencopolymerisat sehr niederer Dichte wird mit 1 Gew.% Zinkstearat und einem sterisch gehinderten Phenol versetzt, in einem Kneter bei 120 °C vorgemischt und anschließend über ein Mischwalzwerk bei 135 °C weiter durchgemischt. Die plastifizierte Mischung wird auf einer 4-Walzen-Kalander-Anlage (F-Form) bei 130 - 145 °C mit einer entsprechenden Walzengeschwindigkeit zu Folien einer Stärke zwischen 0,1 und 0,5 mm ausgezogen.

Die so erhaltene Folie wird bei Temperaturen zwischen 50 und 120 °C mit einer aus einer 0,8 mm starken duplizierten Folie aus Ethylen-Vinylacetat-Copolymerisat mit 8 % Polyethylen gemäß DE-A 41 14 085 unter Hinzufügung einer Gewebeunterlage bei einer Maschinengeschwindigkeit zwischen 3 und 6 m/min in einer Kalander-Anlage vereinigt.

Es wird so ein Bodenbelag einer Endstärke von ca. 2,5 mm erhalten welcher folgende Eigenschaften hat:

| | | |
|---|---|---|
| Shorehärte A: | 77 | DIN 53 505 |
| Shorehärte D: | 26 | DIN 53 505 |

| Rückfederung: | | |
|---|---|---|
| -Kurzzeiteindruck | 65 % | DIN 51 955 |
| -Langzeiteindruck | 70 % | DIN 51 955 |
| Verschleiß: 0,03 mm | DIN 51 963 | |
| Brandprüfung: | NBR | MVSS 302 |
| | B2 | DIN 4102 |

## Patentansprüche

1. Verfahren zur Herstellung von PVC-freien Fußböden aus Ethylen-Vinylacetat-Copolymerisaten und Füllstoffen mit einer PVC-freien, transparenten Abdeckung **dadurch gekennzeichnet**, daß man ein lineares Ethylencopolymerisat niedriger Dichte und/oder sehr niedriger Dichte, welches bis zu 2 Gew.% an üblichen Verarbeitungshilfsstoffen enthält, bei 110 - 130 °C plastifiziert, auf einer Kalanderanlage bei Temperaturen von 130 - 145 °C zur Folie auswalzt und die so erhaltene Folie anschließend über eine Duplier-/ Triplieranlage als Abdeckung mit den PVC-freien Fußbodenbelagsfolien auf Basis Ethylen-Vinylacetat-Copolymerisat dubliert bzw. tripliert und gegebenenfalls noch mit einer Unterlage auf Basis Gewebe, Vlies oder Kork versieht.

2. Verfahren nach Anspruch 1, **dadurch gekennzeichnet**, daß das Ethylencopolymerisat aus 50 - 100 Gew.%, vorzugsweise 80 - 95 Gew.%, Ethylencopolymerisat sehr niedriger Dichte besteht.

3. Verfahren nach Anspruch 2, **dadurch gekennzeichnet**, daß das Gemisch als weiteres Ethylencopolymerisat ein lineares Ethylencopolymerisat niedriger Dichte in Höhe von 50 - 0 Gew.%, vorzugsweise 20 - 5 Gew.% enthält.

4. Verfahren nach einem der Ansprüche 1 - 3, **dadurch gekennzeichnet**, daß der Schmelzindex MFI des Ethylencopolymerisats sehr niedriger Dichte zwischen 0,3 und 8,0 g/10 min, und der Schmelzindex MFI des linearen Ethylencopolymerisats niedriger Dichte zwischen 0,5 und 8g/10 min liegt (190 °C / 2,16 gemäß DIN 53 735).

5. Verfahren nach einem der Ansprüche 1 - 4, **dadurch gekennzeichnet**, daß das Verarbeitungshilfsmittel bis zu 60 Gew.%, vorzugsweise 30 - 40 Gew.% Lichtschutzmittel und oder UV-Absorber enthält.

6. Bodenbelag bestehend aus einer Ethylen-Vinylacetat-Copolymerisat und Füllstoffe enthaltenden Grundschicht und einer transparenten, PVC-freien Abdeckung, **dadurch gekennzeichnet**, daß die Abdeckung ein Ethylencopolymerisat sehr niedriger Dichte und bis zu 2 % Verarbeitungshilfsstoffe enthält.

7. Bodenbelag gemäß Anspruch 6, **dadurch gekennzeichnet**, daß das Ethylencopolymerisat aus 50 - 100 Gew.%, vorzugsweise 80 - 95 Gew.% Ethylencopolymerisat sehr niedriger Dichte und 0 - 50 Gew.% vorzugsweise 5 - 20 Gew.% linearem Ethylencopolymerisat niedriger Dichte besteht.

8. Bodenbelag gemäß Anspruch 5 und 6, **dadurch gekennzeichnet**, daß der Schmelzindex des Ethylencopolymerisat sehr niedriger Dichte zwischen 0,3 und 8 g/10 min, der des linearen Ethylencopolymerisats niedriger Dichte zwischen 0,5 und 8,0 g/10 min, liegt (190 °C / 2,16 gemäß DIN 53 735).

## Claims

1. Process for the production of PVC-free floor coverings from ethylene-vinyl acetate copolymers and filling materials with a PVC-free, transparent covering, characterised in that one plastifies a linear ethylene copolymer of low density and/or very low density which contains up to 2 wt.% of usual processing adjuvants, plastifies at 110 - 130°C, rolls out to the foil on a calendar plant at temperatures of 130 - 145°C and subsequently doubles or triplicates the so obtained foil with a doubling or triplicating plant with the PVC-free floor covering foil based on ethylene-vinyl acetate copolymer as covering and possibly also provides with a substrate based on fabric, fleece or cork.

2. Process according to claim 1, characterised in that the ethylene copolymer consists of 50 - 100 wt.%, preferably 80 - 95 wt.%, of ethylene copolymer of very low density.

3. Process according to claim 2, characterised in that the mixture contains, as further ethylene copolymer, a linear ethylene copolymer of low density in an amount of 50 - 0 wt.%, preferably of 20 - 5 wt.%.

4. Process according to one of claims 1 - 3, characterised in that the melt index MFI of the ethylene copolymer of very low density lies between 0.3 and 8.0 g/10 min and the melt index MFI of the linear ethylene copolymer of low density lies between 0.5 and 8 g/10 min (190°C/2.16 according to DIN 53 735).

5. Process according to one of claims 1 - 4, characterised in that the processing adjuvant contains up to 60 wt.%, preferably 30 - 40 wt.%, of light stabiliser and/or UV absorber.

6. Floor covering consisting of an ethylene-vinyl acetate copolymer and filling materials containing ground layer and of a transparent PVC-free covering, characterised in that the covering contains an ethylene copolymer of very low density and up to 2% of processing adjuvants.

7. Floor covering according to claim 6, characterised in that the ethylene copolymer consists of 50 - 100 wt.%, preferably 80 - 95 wt.% of ethylene copolymer of very low density and 0 - 50 wt.%, preferably 5 - 20 wt.% of linear ethylene copolymer of low density.

8. Floor covering according to claims 5 and 6, characterised in that the melt index of the ethylene copolymer of very low density lies between 0.3 and 8 g/10 min, that of the linear ethylene copolymer of low density lies between 0.5 and 8.0 g/10 min (190°C/2.16 according to DIN 53 735).

## Revendications

1. Procédé pour la préparation de sols exempts de PVC, constitués par des copolymères d'éthylène-acétate de vinyle et par des matières de charge, comprenant un revêtement transparent exempt de PVC, caractérisé en ce qu'on plastifie un copolymère d'éthylène linéaire basse densité et/ou très basse densité, qui contient les adjuvants de traitement habituels jusqu'à concurrence de 2% en poids, à une température de 110 à 130°C, on l'étire sur une installation de calandrage à des températures de 130 à 145°C pour obtenir une feuille et on munit ensuite la feuille ainsi obtenue d'une doublure, respectivement d'une triplure à titre de recouvrement, via une installation d'application d'une doublure/triplure à l'aide des feuilles de tapis de sol exemptes de PVC à base d'un copolymère d'éthylène-acétate de vinyle, et on la munit, le cas échéant, encore d'un substrat à base de tissu, de non-tissé ou de liège.

2. Procédé selon la revendication 1, caractérisé en ce que le copolymère d'éthylène est constitué d'un copolymère d'éthylène très basse densité à concurrence de 50 à 100% en poids, de préférence de 80 à 95% en poids.

3. Procédé selon la revendication 2, caractérisé en ce que le mélange contient, à titre de copolymère d'éthylène supplémentaire, un copolymère d'éthylène linéaire basse densité à concurrence de 50-0% en poids, de préférence de 20-5% en poids.

4. Procédé selon l'une quelconque des revendications 1 à 3, caractérisé en ce que l'indice de fluidité à chaud MFI du copolymère d'éthylène très basse densité se situe entre 0,3 et 8,0 g/10 min et l'indice de fluidité à chaud MFI du copolymère d'éthylène linéaire basse densité se situe entre 0,5 et 8 g/10 min (190°C/2,16 selon la norme DIN 53 735).

5. Procédé selon l'une quelconque des revendications 1 à 4, caractérisé en ce que l'adjuvant de traitement contient un agent de protection contre l'effet de la lumière et/ou un absorbant UV jusqu'à concurrence de 60% en poids, de préférence de 30 à 40% en poids.

6. Revêtement de sol constitué par une couche de base contenant un copolymère d'éthylène-acétate de vinyle et des matières de charge, et par un revêtement transparent exempt de PVC, caractérisé en ce que le revêtement contient un copolymère d'éthylène très basse densité et un adjuvant de traitement jusqu'à concurrence de 2%.

7. Revêtement de sol selon la revendication 6, caractérisé en ce que le copolymère d'éthylène est constitué par un copolymère d'éthylène très basse densité à concurrence de 50 à 100% en poids, de préférence de 80 à 95% en poids, et par un copolymère d'éthylène linéaire basse densité à concurrence de 0 à 50% en poids, de préférence de 5 à 20% en poids.

8. Revêtement de sol selon les revendications 5 et 6, caractérisé en ce que l'indice de fluidité à chaud du copolymère d'éthylène très basse densité se situe entre 0,3 et 8 g/10 min, l'indice de fluidité à chaud du copolymère d'éthylène linéaire basse densité se situant entre 0,5 et 8,0 g/10 min (190°C/2,16 selon la norme DIN 53 735).
